# EUROPEAN PATENT SPECIFICATION

(11) **EP 1 660 797 B1**
(45) Date of publication and mention of the grant of the patent: **24.02.2010**
(21) Application number: 04761610.7
(22) Date of filing: 03.08.2004
(51) Int. Cl.: F16J 15/56

(54) **SCRAPER RING ASSEMBLY**
ABSTREIFRINGANORDNUNG
ENSEMBLE SEGMENT RACLEUR

(30) Priority: 04.08.2003 CA 2436372; 29.01.2004 CA 2456395
(43) Date of publication of application: 31.05.2006
(73) Proprietor: Industries Mailhot Inc., Terrebonne, Quebec J6X 4J8 (CA)
(72) Inventor: MAINVILLE, Luc, Joliette, Quebec J6E 8P3 (CA)
(74) Representative: Clark, Jane Anne
(86) International application number: PCT/CA2004/001444
(87) International publication number: WO 2005/012772

(56) References cited:
- BE-A- 412 110
- JP-A- 60 018 664
- US-A- 2 772 105
- US-A- 2 772 105
- US-A- 5 133 563
- MELVIN BROWN: 'Seals and sealing handbook', 1995, ELSEVIER ADVANCED TECHNOLOGY pages 289 - 290, XP008087095
- HUGO BOUCHTER: 'Industrial sealing technology', 1974, WILEY page 281, XP008087346

## Description

### FIELD OF THE INVENTION

The present invention relates to shafts. More specifically, the present invention is concerned with a cleaning assembly for a shaft.

### BACKGROUND OF THE INVENTION

Telescopic cylinders consist of a series of telescopically arranged tubular sections with a cap closing a first end of each section. A second end of each section is mounted with a two-piece cylinder head while an inner tubular member has a plunger pin eye which threads into the tube section. The cylinder heads are threadedly mounted to an outer wall at the second end of each section; they are provided with dynamic and static seal means for sealing and with scraper means for removing debris from a surface along which the dynamic seal means slidably contacts.

Industrial telescoping cylinders may be exposed to a wide range of contaminants, especially when provided on refuse collection trucks or garbage compactors for example. In refuse collection trucks, organic or mineral substances tend to adhere and accumulate on exposed surfaces of the vehicles, such as surfaces of sections of cylinder heads of the telescoping cylinders, where they cook under the action of heat. Such substances stick to surfaces of the cylinder heads and result in rapid damages of the sealing joints thereof, which may result in premature spills and leaks.

Benjamin et al., in the patent no. US 4, 168, 837 disclose a scraper ring for a shaft, which has a scraper edge formed by pinching or piercing a brass member. Wyse, in the patent no. US 4,577,363, describes a scraper ring formed of two semicircular mating sections made of a metal such as brass or bronze, or formed of a rigid high strength plastic material, intended to clean a piston rod of a hydraulic cylinder exposed to dirt, mud and ice for example. Such scraper rings are not satisfactory in application involving industrial telescoping cylinders that are exposed to the wide range of contaminants cooked on a tubular surface as discussed hereinabove.
US-A-2 772 105 describes a wiper ring for scraping and cleaning the surface of the sliding rods of hydraulic shock struts and similar equipment forming part of aeroplane landing gear. The wiper ring comprises a scraper or cleaning ring which is split circumferentially at an angle to its axis and has around its outer edge a reduced annular portion forming a channel or groove. The channel or groove receives a number of split rings which have a normal internal diameter slightly less than the outside diameter of the groove. When the split rings are received in the groove they deform the groove slightly and act to urge the cleaning ring into a closed position with its bearing edge in engagement around the entire circumference of the shaft to be scraped. BE 412 110 describes a scraper ring which also acts as a joint seal.
Hugo Buchter, Industrial Sealing Technology, 1974, Wiley, page 281, describes an assembly comprising an inner member displaceable in an outer member and a blade mounted therebetween, whereby the blade contacts the outer surface of the inner member at a tool angle and whereby the tool angle and the pressure of the blade are adjusted by an external rubber ring.

Therefore, there is a need in the art for an improved cleaning assembly for a shaft such as a cylinder member.

### SUMMARY OF THE INVENTION

In accordance with the invention, there is provided an assembly, as set out in claim 1.
In an embodiment, there is provided a cleaning assembly for a structure made of a series of tubular sections arranged in a tubular housing, each of the tubular sections comprising an inner tubular member displaceable in an outer tubular member respectively, the cleaning assembly comprising at least one blade mounted between the inner tubular member and the outer tubular member; wherein a tool angle of the at least one blade and a pressure the at least one blade creates on an outer surface of the inner tubular member are adjusted by a compressive rubber joint separate from the blade to continuously remove contaminants off the outer surface of the inner tubular member.

In an embodiment, the inner and outer tubular members provide a cylinder head and the assembly is mounted between the outer tubular member and the inner tubular member further toward an open end thereof than a sealing joint between the inner and outer tubular members.

Other aspects, advantages and features of the present invention will become more apparent upon reading of the following non-restrictive description of embodiments thereof, given by way of example only with reference to the accompanying drawings.

### BRIEF DESCRIPTON OF THE DRAWINGS

In the appended drawings:

Figure 1 is a partial cross-sectional view of a telescopic cylinder;

Figure 2 is a perspective view of an assembly according to an embodiment the present invention; and

Figure 3 is an exploded view of the assembly of Figure 2.

### DESCRIPTON OF EMBODIMENTS OF THE INVENTION:

Generally stated, there is provided a cleaning assembly for a shaft or a tubular structure.

For clarity purposes, the invention will be described in relation to a structure made of a series of series of tubular sections telescopically arranged in a tubular housing, each of the tubular sections having one end provided with a cylinder head, and comprising a inner tubular member telescopically displaceable in an outer tubular member respectively, such as a telescopic cylinder for example, intended for use in contaminated environments.

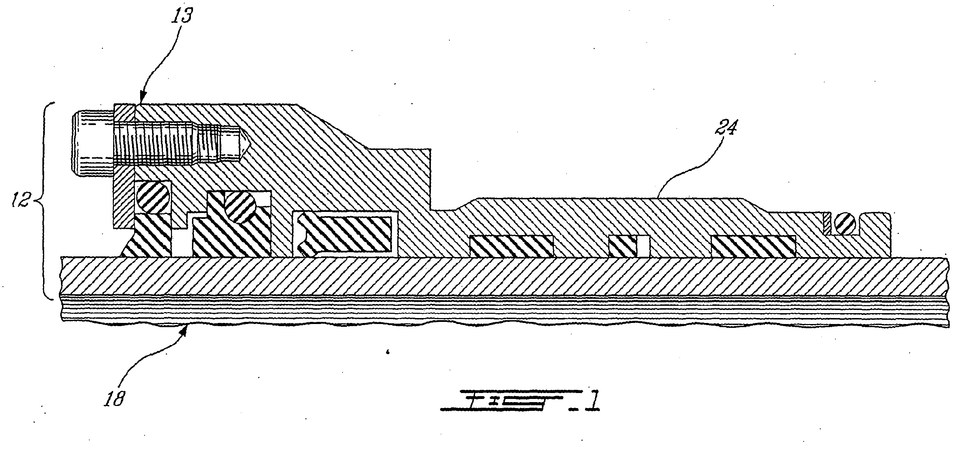

As illustrated in Figure 1, a telescopic cylinder comprises a series of tubular sections 12. Each tubular section 12 has one end provided with a cylinder head 13, and comprises an inner tubular member 18 telescopically displaceable in an outer tubular member 24.

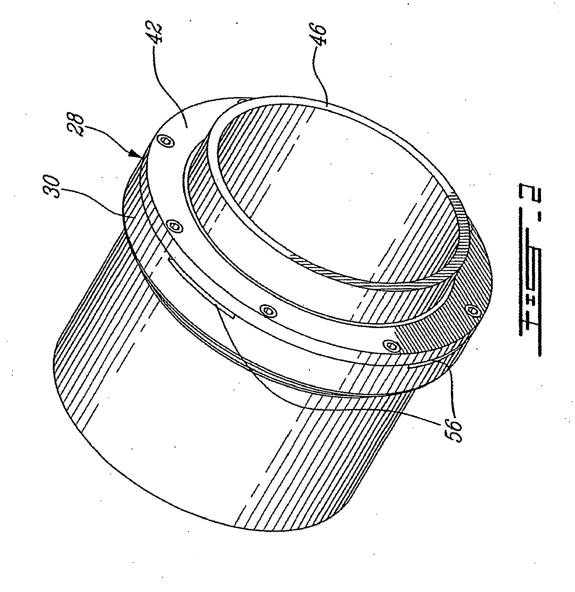

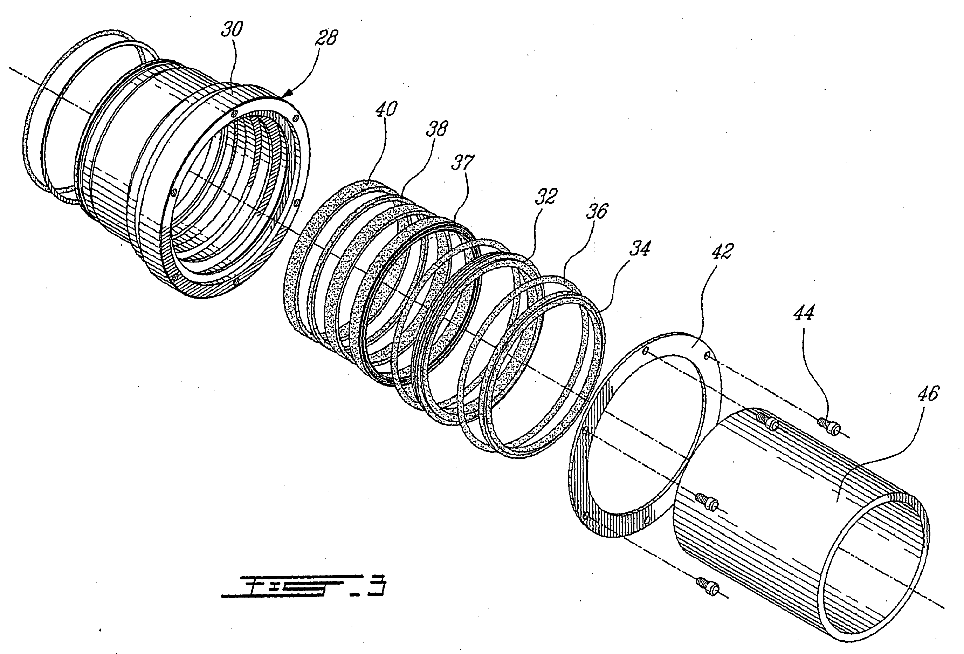

As best seen in Figures 2 and 3, the structure comprises a cylinder head 28 with an outer wall having an enlarged annular portion 30; a pipe wiper 32 separated, by U-cup 37, to a blade 34 inserted into an O-ring joint 36. The pipe wiper 32 is lodged in a corresponding circumferencial recess in an inner wall of the cylinder head 28, with a sealing joint 38 and a wear ring 40 providing a sealing wall, as is well known in the art.

The blade 34 is positioned in series in relation to the pipe wiper 32. It is secured by a flange 42 against a lateral surface of the enlarged annular portion 30 of the cylinder head 28, for example by screws 44 as shown in Figures 2 and 3, so that it slides on an outer surface of an inner tubular member 46, thereby scraping contamination such as organic material or mineral material thereof without allowing them to accumulate on a cutting edge of the blade 34.

The blade is selected to have a sharp cutting edge. The blade is made in a material characterized by a high hardness, such as a material suitable for making cutting tools like a tool steel of a steel M2 type. Alternatively, a coated steel with a hard coating and auto lubricating and anti-adhesive properties, such as D.L.C (Diamond Like Carbon) may be used. DLC are known to have a small coefficient of friction and an excellent surface smoothness; the degree of hardness of the DLC coating is 3,500 to 4,000 HV, and the abrasion resistance is excellent. DLC coatings are known for combining wear resistance, linked to hardness, and self-lubricating capacity. Other hard coatings may be contemplated.

The tool angle of the blade 34 and the pressure of the blade 34 on the outer surface of the inner tubular member are adjusted by controlling a compression of the rubber joint element 36 such as a nitrile O-ring joint, so that the pressure exerted by the blade on the outer surface of the inner tubular member 46 is at least 10lbs/inch² (6.9 x 16⁴Pa).

Such a blade proves to be very efficient in removing_cooked organic and mineral contaminants from the outer surface of the tubular members.

In combination with such a cleaning assembly comprising such a scrapper blade, the outer surface of the tubular member to be cleaned is previously submitted to a hardening treatment such as a nitriding treatment, so as to obtain a higher superficial hardness and an increased resistance to fatigue and surface rubbing, in such a way that a surface finish of the tubular member may be protected against an aggressive action of the scrapper blade. It is found that the blade of the present cleaning assembly is able to cut away surface defects such as dents or imperfections on such a hardened surface without damaging the surface finish thereof.

People in the art will appreciate that the mounting of the blade may take into account mechanical stability of the overall cylinder assembly, since vibrations for example are to be controlled.

In operation, when the tubular members are telescopically displaced, the pipe wiper, thus protected by a strong blade as described hereinabove, performs a finish work of the outer surface of the inner tubular member by scraping any remaining contamination away outside of the cylinder, after the blade has scrapped off a main part of the contaminants. In absence of the blade, these contaminants easily go under a lip of the pipe wiper and are therefore swallowed by the cylinder. The blade prevents such contaminants to enter the cylinder.

As best seen in Figure 2, discharge apertures 56 may be provided on a periphery of the cylinder head 28 to evacuate the contamination scraped off by the blade 32.

The blade proves to be very efficient in systematically cleaning away organic contamination from the surface of the cylinder.

It may be contemplated to provide a plurality of blades in series, for example secured by the flange 52, to even increase the scraping efficiency.

Alternatively, in a further embodiment of the present invention, a cylinder head may comprise a sealing joint or a series of two sealing joints between an outer tubular element thereof and an inner tubular member thereof, and a pipe wiper.

The pipe wiper may be made in urethane and the sealing joint of P.T.F.E (polytetrafluoroethylene) and bronze, or the pipe wiper in P.T.F.E-bronze and the sealing joint of P.T.F.E and carbon fibres for example. Pipe wipers and sealing joints in hydrogenated nitrile (HNBR) may also be used.

The surface finish of the cylinder is selected according to specifications associated with selected pipe wipers as is well known in the art.

It is found that such a cleaning assembly allows a protection against contamination by allowing a tubular surface to be continuously cleaned of contaminants.

Contaminants may comprise organic materials and plastic materials for example.

Although the present invention has been described hereinabove by way of embodiments thereof, it can be modified, without departing from the nature and teachings thereof as defined herein.

## Claims

1. An assembly, comprising: an inner tubular member (18) displaceable in an outer tubular member (24), at least one part of an outer surface of said inner tubular member (18) being made of a hardened material; and at least one blade (34) mounted between said inner tubular member (18) and said outer tubular member (24), said at least one blade (34) being made in a material harder than the at least one part of an outer surface of said inner tubular member (18); wherein said at least one blade (34) contacts said at least one part of the outer surface at a tool angle; wherein said tool angle of said at least one blade (34) and the pressure the at least one blade exerts on said inner tubular member are adjustable by a compressive joint (36) separate from the blade (34); and wherein the at least one blade exerts a pressure of at least 6.9 x 10⁴Pa (10lbs/inch²) to cut away surface defects without damaging the surface finish of said hardened part of said outer surface.

2. The assembly according to claim 1, wherein the compressive joint (36) is compressive rubber joint (36).

3. The assembly according to claim 1 or 2, wherein said outer tubular element (24) comprises discharge apertures (56) on a periphery thereof for evacuation of contaminants removed from the outer surface of said inner tubular member (18) by said at least one blade (34).

4. The assembly according to claim 3, wherein the contaminants are selected in the group consisting of mineral materials, raw and cooked organic materials.

5. The assembly according to any one of claims 1 to 4, wherein said harder material is selected from a tool steel and a coated steel.

6. The assembly according to any one of claims 1 to 5, wherein the at least one part of the outer surface of the inner tubular member (18) is hardened by nitridation.

7. The assembly according to any one of claims 1 to 5, wherein the outer surface of the inner tubular member (18) is hardened by nitridation.

8. The assembly according to any one of claims 1 to 7, further comprising at least one pipe wiper mounted between said inner tubular member and said outer tubular member, said at least one blade being mounted in series with said at least one pipe wiper between said inner tubular member and said outer tubular member.

9. The assembly according to any one of claims 1 to 7, comprising: at least one sealing joint mounted between the outer tubular member and the inner tubular member; at least one pipe wiper mounted between said inner tubular member and said outer tubular member further toward an open end thereof in relation to said at least one sealing joint; wherein said at least one blade is positioned in series and toward the open end in relation to said pipe wiper, said at least one blade being mounted in series with said at least one pipe wiper between said inner tubular member and said outer tubular member.

10. The assembly of any one of claims 1 to 9, wherein the outer tubular member provides a cylinder head (13).

11. A telescopic cylinder structure comprising the assembly of any one of claims 1 to 10.

## Patentansprüche

1. Anordnung, die umfasst: ein inneres rohrförmiges Element (18), das in einem äußeren rohrförmigen Element (24) verlagerbar ist, wobei wenigstens ein Teil einer äußeren Oberfläche des inneren rohrförmigen Elements (18) aus einem gehärteten Material hergestellt ist; und wenigstens eine Klinge (34), die zwischen dem inneren rohrförmigen Element (18) und dem äußeren rohrförmigen Element (24) montiert ist, wobei die wenigstens eine Klinge (34) aus einem Material hergestellt ist, das härter ist als der wenigstens eine Teil einer äußeren Oberfläche des inneren rohrförmigen Elements (18); wobei die wenigstens eine Klinge (34) mit dem wenigstens einen Teil der äußeren Oberfläche unter einem Werkzeugwinkel in Kontakt ist; wobei der Werkzeugwinkel der wenigstens einen Klinge (34) und der Druck, den die wenigstens eine Klinge auf das innere rohrförmige Element ausübt, durch eine Pressdichtung (36), die von der Klinge (34) getrennt ist, einstellbar sind; und wobei die wenigstens eine Klinge einen Druck von wenigstens 6,9 × 10⁴ Pa (10 lbs/Zoll²) ausübt, um Oberflächendefekte abzuschneiden, ohne die Oberflächenbeschaffenheit des gehärteten Teils der äußeren Oberfläche zu beschädigen.

2. Anordnung nach Anspruch 1, wobei die Pressdichtung (36) eine Pressgummidichtung (36) ist.

3. Anordnung nach Anspruch 1 oder 2, wobei das äußere rohrförmige Element (24) an einem Umfang Abführöffnungen (56) aufweist, um Verunreinigungen abzuführen, die von der äußeren Oberfläche des inneren rohrförmigen Elements (18) durch die wenigstens eine Klinge (34) entfernt worden sind.

4. Anordnung nach Anspruch 3, wobei die Verunreinigungen aus der Gruppe gewählt sind, die aus mineralischen Materialien sowie rohen und gekochten organischen Materialien besteht.

5. Anordnung nach einem der Ansprüche 1 bis 4, wobei das härtere Material aus einem Werkzeugstahl und einem beschichteten Stahl gewählt ist.

6. Anordnung nach einem der Ansprüche 1 bis 5, wobei der wenigstens eine Teil der äußeren Oberfläche des inneren rohrförmigen Elements (18) durch Nitridbildung gehärtet ist.

7. Anordnung nach einem der Ansprüche 1 bis 5, wobei die äußere Oberfläche des inneren rohrförmigen Elements (18) durch Nitridbildung gehärtet ist.

8. Anordnung nach einem der Ansprüche 1 bis 7, die ferner wenigstens einen Rohrnocken umfasst, der zwischen dem inneren rohrförmigen Element und dem äußeren rohrförmigen Element montiert ist, wobei die wenigstens eine Klinge in einer Reihe mit dem wenigstens einen Rohrnocken zwischen dem inneren rohrförmigen Element und dem äußeren rohrförmigen Element montiert ist.

9. Anordnung nach einem der Ansprüche 1 bis 7, die umfasst: wenigstens eine Dichtung, die zwischen dem äußeren rohrförmigen Element und dem inneren rohrförmigen Element montiert ist; wenigstens einen Rohrnocken, der zwischen dem inneren rohrförmigen Element und dem äußeren rohrförmigen Element näher bei einem offenen Ende hiervon in Bezug auf die wenigstens eine Dichtung montiert ist; wobei die wenigstens eine Klinge in einer Reihe und näher bei dem offenen Ende in Bezug auf den Rohrnocken angeordnet ist, wobei die wenigstens eine Klinge in einer Reihe mit dem wenigstens einen Rohrnocken zwischen dem inneren rohrförmigen Element und dem äußeren rohrförmigen Element montiert ist.

10. Anordnung nach einem der Ansprüche 1 bis 9, wobei das äußere rohrförmige Element einen Zylinderkopf (13) bildet.

11. Teleskopzylinderstruktur, die die Anordnung nach einem der Ansprüche 1 bis 10 enthält.

## Revendications

1. Ensemble comprenant : un élément tubulaire intérieur (18) déplaçable dans un élément tubulaire extérieur (24), au moins une partie d'une surface extérieure dudit élément tubulaire intérieur (18) étant constituée d'un matériau durci ; et au moins une lame (34) montée entre ledit élément tubulaire intérieur (18) et ledit élément tubulaire extérieur (24), ladite au moins une lame (34) étant constituée d'un matériau plus dur que la au moins une partie d'une surface extérieure dudit élément tubulaire intérieur (18) ; dans lequel ladite au moins une lame (34) est en contact avec ladite au moins une partie de la surface extérieure à un angle d'outil ; dans lequel ledit angle d'outil de ladite au moins une lame (34) et la pression que la au moins une lame exerce sur ledit élément tubulaire intérieur sont ajustables par un joint de compression (36) séparé de la lame (34) ; et dans lequel la au moins une lame exerce une pression d'au moins 6,9 x 10⁴ Pa (10 livres/pouce²) pour couper les défauts de surface sans endommager la finition de la surface de ladite partie durcie de ladite surface extérieure.

2. Ensemble selon la revendication 1, dans lequel le joint de compression (36) est un joint de compression en caoutchouc (36).

3. Ensemble selon les revendications 1 ou 2, dans lequel ledit élément tubulaire extérieur (24) comprend des ouvertures d'évacuation (56) sur une périphérie de celui-ci pour l'évacuation des contaminants retirés de la surface extérieure dudit élément tubulaire intérieur (18) par ladite au moins une lame (34).

4. Ensemble selon la revendication 3, dans lequel les contaminants sont sélectionnés parmi le groupe composé de matières minérales et de matières organiques crues et cuites.

5. Ensemble selon l'une quelconque des revendications 1 à 4, dans lequel ledit matériau plus dur est sélectionné parmi un acier d'outillage et un acier revêtu.

6. Ensemble selon l'une quelconque des revendications 1 à 5, dans lequel la au moins une partie de la surface extérieure de l'élément tubulaire intérieur (18) est durcie par nitruration.

7. Ensemble selon l'une quelconque des revendications 1 à 5, dans lequel la surface extérieure de l'élément tubulaire intérieur (18) est durcie par nitruration.

8. Ensemble selon l'une quelconque des revendications 1 à 7, comprenant également au moins un essuie-tige monté entre ledit élément tubulaire intérieur et ledit élément tubulaire extérieur, ladite au moins une lame étant montée en série avec ledit au moins un essuie-tige entre ledit élément tubulaire intérieur et ledit élément tubulaire extérieur.

9. Ensemble selon l'une quelconque des revendications 1 à 7, comprenant : au moins un joint d'étanchéité monté entre l'élément tubulaire extérieur et l'élément tubulaire intérieur ; au moins un essuie-tige monté entre ledit élément tubulaire intérieur et ledit élément tubulaire extérieur plus loin vers une extrémité ouverte de ceux-ci en rapport avec ledit au moins un joint d'étanchéité, dans lequel ladite au moins une lame est positionnée en série et vers l'extrémité ouverte par rapport audit essuie-tige, ladite au moins une lame étant montée en série avec ledit au moins un essuie-tige entre ledit élément tubulaire intérieur et ledit élément tubulaire extérieur.

10. Ensemble selon l'une quelconque des revendications 1 à 9, dans lequel l'élément tubulaire extérieur fournit une culasse (13).

11. Structure cylindrique télescopique comprenant l'ensemble selon l'une quelconque des revendications 1 à 10.
